# DEMANDE DE BREVET EUROPEEN

(11) **EP 4 170 551 A1**
(43) Date de publication de la demande: **26.04.2023**
(21) Numéro de dépôt: 22200721.3
(22) Date de dépôt: 11.10.2022
(51) Int. Cl.: G06N 3/063, G06F 1/3231, G06F 1/3234, G06N 3/04

(54) **PROCÉDÉ DE DÉTECTION D'ÉVÉNEMENTS OU D'ÉLÉMENTS DANS DES SIGNAUX PHYSIQUES PAR LA MISE EN OEUVRE D'UN RÉSEAU DE NEURONES ARTIFICIELS**

(30) Priorité: 25.10.2021 FR 2111299
(71) Demandeur: STMicroelectronics (Rousset) SAS, 13790 Rousset (FR)
(72) Inventeur: DEMAJ, Pierre, 06200 NICE (FR); FOLLIOT, Laurent, 06620 GOURDON (FR)
(74) Mandataire: Casalonga

(57) **Abrégé**

Selon un aspect, il est proposé un procédé de détection d'événements ou d'éléments dans des signaux physiques, comportant :
- au moins une mise en œuvre (21) d'un réseau de neurones artificiels de référence,
- au moins une mise en œuvre (28) d'un réseau de neurones artificiels auxiliaire distinct du réseau de neurones de référence, le réseau de neurones artificiels auxiliaire étant simplifié par rapport au réseau de neurones de référence,
- au moins une évaluation (26, 33) d'une probabilité de présence de l'événement ou de l'élément par la mise en œuvre du réseau de neurones de référence ou par la mise en œuvre du réseau de neurones auxiliaire,
dans lequel le réseau de neurones de référence est mis en œuvre lorsque la probabilité de présence de l'événement ou de l'élément est supérieure à un seuil, et dans lequel le réseau de neurones auxiliaire est mis en œuvre lorsque la probabilité de présence de l'événement ou de l'élément est inférieure audit seuil.

## Description

Des modes de réalisation et de mise en œuvre concernent les réseaux de neurones artificiels configurés pour détecter des événements ou des éléments dans des signaux physiques, c'est-à-dire des signaux physiques représentatifs d'entités physiques, notamment des images, et plus particulièrement l'optimisation de la consommation d'énergie résultant de la mise en œuvre de tels réseaux de neurones artificiels, notamment par un microcontrôleur.

Les réseaux de neurones artificiels peuvent être utilisés pour détecter des événements ou des éléments dans des signaux physiques reçus en entrée de ces réseaux de neurones. Par exemple, les réseaux de neurones artificiels peuvent prendre en entrée des images et sont utilisés pour détecter des événements ou des éléments dans ces images, notamment pour détecter des objets ou des personnes.

L'exécution d'un réseau de neurones peut impliquer une quantité importante de calculs à effectuer. Or, plus le nombre de calculs à effectuer est important, plus une consommation d'énergie résultant de l'exécution du réseau de neurones est élevée. La consommation d'énergie résultant de l'exécution d'un réseau de neurones dépend donc du temps d'exécution du réseau de neurones qui est lui-même lié à la complexité de ce réseau de neurones.

Dans certaines applications, les réseaux de neurones peuvent être mis en œuvre par des microcontrôleurs présentant une autonomie en énergie limitée. En effet, les microcontrôleurs peuvent ne pas être alimentés directement par un réseau de distribution électrique mais peuvent être mis sous tension par une batterie autonome présentant une capacité de stockage d'énergie limitée. Par exemple, les réseaux de neurones peuvent être mis en œuvre par des microcontrôleurs intégrés dans des objets connectés comportant des batteries pour alimenter ces micro contrôleur s.

Il est particulièrement important dans ces applications de réduire la consommation d'énergie du microcontrôleur mettant en œuvre le réseau de neurones afin d'augmenter la durée de vie de la batterie, de sorte que le microcontrôleur puisse être utilisé le plus longtemps possible avant un rechargement de la batterie, voire un remplacement du dispositif comportant le microcontrôleur, non pratique et coûteux.

Afin de réduire la consommation d'énergie du microcontrôleur, il est possible d'arrêter d'utiliser le réseau de neurones pendant certaines périodes. Néanmoins, une telle solution présente l'inconvénient de ne pas permettre de détecter d'événements ou d'éléments dans les signaux physiques reçus en entrée pendant ces périodes.

Il est également possible de simplifier le réseau de neurones artificiels pour réduire les calculs à effectuer lors de l'exécution du réseau de neurones simplifié. Par exemple, la quantification d'un réseau de neurones permet de le simplifier. Néanmoins, les réseaux de neurones simplifiés peuvent entraîner une perte de performances du réseau de neurones pour détecter des événements ou des éléments dans les signaux physiques reçus en entrée de ce réseau de neurones.

Il convient donc de proposer une solution permettant de réduire la consommation d'énergie d'un microcontrôleur mettant en œuvre un réseau de neurones adapté pour détecter des événements ou des éléments tout en préservant de bonnes performances de détection.

Selon un aspect, il est proposé un procédé de détection d'événements ou d'éléments dans des signaux physiques, comportant :
- au moins une mise en œuvre d'un réseau de neurones artificiels de référence,
- au moins une mise en œuvre d'un réseau de neurones artificiels auxiliaire distinct du réseau de neurones de référence, le réseau de neurones artificiels auxiliaire étant simplifié par rapport au réseau de neurones de référence,
- au moins une évaluation d'une probabilité de présence de l'événement ou de l'élément par la mise en œuvre du réseau de neurones de référence ou par la mise en œuvre du réseau de neurones auxiliaire,
dans lequel le réseau de neurones de référence est mis en œuvre lorsque la probabilité de présence de l'événement ou de l'élément est supérieure à un seuil, et dans lequel le réseau de neurones auxiliaire est mis en œuvre lorsque la probabilité de présence de l'événement ou de l'élément est inférieure audit seuil.

Le réseau de neurones de référence et le réseau de neurones auxiliaire peuvent être mis en œuvre par un microcontrôleur alimenté en énergie par une batterie.

La consommation d'énergie résultant de la mise en œuvre d'un réseau de neurones varie en fonction de la quantité de calculs à effectuer avant de générer des données en sortie du réseau de neurones. En particulier, plus le nombre de calculs est limité, plus la consommation d'énergie résultant de la mise en œuvre du réseau de neurones est réduite. Ainsi, dans un procédé selon l'invention, la mise en œuvre du réseau de neurones auxiliaire lorsque la probabilité de présence de l'événement ou de l'élément est inférieure audit seuil permet de réduire la consommation d'énergie résultant de la mise en œuvre du procédé de détection.

En effet, le réseau de neurones auxiliaire est un réseau plus simple et plus rapide que le réseau de neurones de référence. L'exécution du réseau de neurones auxiliaire nécessite donc moins de calculs à effectuer que l'exécution du réseau de neurones de référence. Le réseau de neurones auxiliaire est donc configuré pour générer plus rapidement des données en sortie à partir d'un signal physique reçu en entrée par rapport au réseau de neurones de référence recevant en entrée ce même signal physique. Bien entendu, les données générées en sortie du réseau de neurones auxiliaire ne sont pas forcément identiques à celles pouvant être générées en sortie du réseau de neurones de référence. L'homme du métier saura définir un réseau de neurones simplifié par rapport au réseau de neurones de référence.

En particulier, le réseau de neurones auxiliaire est distinct du réseau de neurones de référence. Le réseau de neurones auxiliaire peut présenter une topologie différente du réseau de neurones de référence. Plus particulièrement, le réseau de neurones auxiliaire peut avoir des poids différents des poids du réseau de neurones de référence. Le réseau de neurones auxiliaire peut être conçu à partir du réseau de neurones de référence en supprimant par exemple certains neurones du réseau de neurones de référence. Les performances du réseau de neurones auxiliaires peuvent être évaluées par simulation.

Ce réseau de neurones auxiliaire peut être légèrement moins performant que le réseau de neurones de référence. Néanmoins, les performances réduites du réseau de neurones auxiliaire sont compensées par la mise en œuvre du réseau de neurones de référence lorsque la probabilité de la présence de l'événement ou de l'élément déterminée par le réseau de neurones auxiliaire est supérieure audit seuil. En effet, le réseau de neurones auxiliaire est mis en œuvre uniquement lorsque cette probabilité de présence est inférieure à un seuil.

L'exécution du réseau de neurones auxiliaire permet donc de maintenir une surveillance de la présence ou l'absence d'un événement ou d'un élément tout en réduisant la consommation d'énergie. De la sorte, il est possible d'augmenter une durée d'autonomie d'une batterie alimentant le microcontrôleur mettant en œuvre le réseau de neurones. L'évaluation de la probabilité de présence de l'événement ou de l'élément est effectuée régulièrement après une ou plusieurs mises en œuvre du réseau de neurones de référence ou du réseau de neurones auxiliaire.

Un tel procédé est relativement simple à mettre en œuvre.

Dans un mode de mise en œuvre avantageux, le réseau de neurones de référence et le réseau de neurones auxiliaire sont configurés pour pouvoir délimiter ledit événement ou ledit élément à détecter dans le signal physique.

En variante, le réseau de neurones de référence peut être configuré pour pouvoir délimiter ledit événement ou ledit élément à détecter dans le signal physique et le réseau de neurones auxiliaire peut être configuré pour pouvoir identifier (en d'autres termes « classifier ») une présence dudit événement ou dudit élément à détecter dans le signal physique. Un tel réseau de neurones auxiliaire est alors plus simple qu'un réseau de neurones capable de délimiter un événement ou un élément à détecter dans un signal physique. Un tel réseau de neurones auxiliaire consomme donc peu d'énergie. L'identification de la présence d'un événement ou d'un élément dans le signal physique permet de simplifier la détection de l'événement ou de l'élément par le réseau de neurones auxiliaire par rapport au réseau de neurones de référence. Une fois l'événement ou l'élément identifié dans le signal physique, le réseau de neurones de référence peut être mis en œuvre pour délimiter ledit événement ou ledit élément, pour effectuer un suivi de l'événement ou dudit élément dans le signal physique. De la sorte, le procédé permet de maintenir de bonnes performances de suivi. Par exemple, lorsque le signal physique est une image et que l'on cherche à détecter un objet ou une personne dans l'image, le réseau de neurones auxiliaire est configuré pour identifier que l'objet ou qu'une personne est présente dans l'image, et le réseau de neurones de référence est configuré pour délimiter l'objet ou la personne dans l'image, notamment pour effectuer un suivi de la position de l'objet ou de la personne dans une succession d'images.

De préférence, ledit seuil est défini selon une sensibilité et/ou une précision souhaitée du réseau de neurones.

Le réseau de neurones de référence et le réseau de neurones auxiliaire sont stockés dans une mémoire non volatile, notamment une mémoire flash. Le réseau de neurones de référence peut être quantifié sur 8 bits pour être précis et présenter de bonnes performances. Avantageusement, le réseau de neurones auxiliaire est quantifié au maximum sur 8 bits. De préférence, le réseau de neurones auxiliaire est quantifié sur moins de 8 bits. Cela permet de limiter une augmentation trop importante d'un espace de stockage en mémoire pour stocker le réseau de neurones auxiliaire.

Dans un mode de mise en œuvre avantageux, le réseau de neurones auxiliaire comporte au moins une couche quantifiée en binaire. Les poids de ladite au moins une couche prennent alors comme valeur '0' ou '1'. Le réseau de neurones auxiliaire peut néanmoins présenter certaines couches, notamment une couche d'entrée et une couche de sortie, quantifiées en 8 bits ou en flottants. Les couches, dites couches cachées (en anglais « hidden layers »), situées entre la couche d'entrée et la couche de sortie peuvent alors être quantifiées en binaire. Un réseau de neurones auxiliaire quantifié en binaire pour la plupart de ces couches peut être obtenus simplement pour identifier (classifier) un élément dans un signal physique. La publication « Binary Neural Networks: A Survey », de Haotong Qin et al, publiée le 31 mars 2020 décrit des méthodes permettant d'obtenir un réseau de neurones quantifié en binaire.

Dans un mode de mise en œuvre, le signal physique en entrée est une image.

Selon un autre aspect, il est proposé un programme d'ordinateur comprenant des instructions qui, lorsque le programme est exécuté par un ordinateur, conduisent celui-ci à :
- mettre en œuvre un réseau de neurones artificiels de référence ou un réseau de neurones artificiels auxiliaire distinct du réseau de neurones de référence pour détecter des événements ou des éléments dans des signaux physiques reçus en entrée de ce réseau de neurones de référence ou de ce réseau de neurones auxiliaire, le réseau de neurones artificiels auxiliaire étant simplifié par rapport au réseau de neurones de référence,
- évaluer une probabilité de présence de l'événement ou de l'élément dans le signal physique par la mise en œuvre du réseau de neurones de référence ou par la mise en œuvre du réseau de neurones auxiliaire, dans lequel le programme est configuré pour mettre en œuvre le réseau de neurones de référence lorsque la probabilité de présence de l'événement ou de l'élément est supérieure à un seuil, et dans lequel le réseau de neurones auxiliaire est mis en œuvre lorsque la probabilité de présence de l'événement ou de l'élément est inférieure audit seuil.

Selon un autre aspect, il est proposé un microcontrôleur comprenant :
- une mémoire dans lequel est stocké un programme tel que décrit précédemment, et
- un processeur configuré pour exécuter ledit programme.

D'autres avantages et caractéristiques de l'invention apparaîtront à l'examen de la description détaillée de modes de mise en œuvre et de réalisation, nullement limitatifs, et des dessins annexés sur lesquels :
[Fig 1]

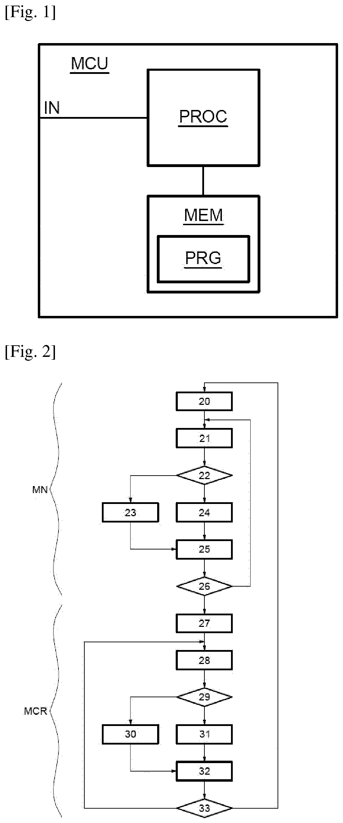

[Fig 2] illustrent schématiquement des modes de réalisation et de mise en œuvre de l'invention.

La figure 1 illustre un microcontrôleur MCU configuré pour pouvoir être alimenté en énergie par une batterie (non représentée). Le microcontrôleur MCU est configuré pour mettre en œuvre un procédé de détection d'événements ou d'éléments dans un signal physique ou plusieurs signaux physiques. Par exemple, le procédé de détection peut permettre de détecter des objets ou des personnes dans des images. Le signal physique est alors une image d'une scène acquise par une caméra. En variante, le signal physique peut provenir de tout autre type de capteur. Par exemple, le signal physique peut être un signal audio délivré par un microphone ou bien un signal délivré par un accéléromètre, un gyroscope, un magnétomètre ou un capteur de temps de vol.

Le microcontrôleur MCU comprend une entrée IN configurée pour recevoir le signal physique.

Le microcontrôleur MCU comprend également une mémoire non volatile MEM, notamment une mémoire flash, dans laquelle est stocké un programme PRG permettant d'exécuter des réseaux de neurones artificiels pour détecter des événements ou des éléments dans le signal physique reçu en entrée IN. En particulier, le microcontrôleur MCU comporte un processeur PROC configuré pour exécuter le programme PRG et donc les réseaux de neurones artificiels.

En particulier, le programme PRG permet d'exécuter un réseau de neurones de référence ou un réseau de neurones auxiliaire.

Plus particulièrement, le procédé de détection comprend deux modes de fonctionnement. Dans un premier mode, dit mode nominal, le réseau de neurones de référence est exécuté par le microcontrôleur MCU à partir du programme PRG. Dans un deuxième mode, dit mode de consommation réduite, le réseau de neurones auxiliaire est exécuté par le microcontrôleur MCU à partir du programme PRG. Comme cela sera décrit dans la suite, le mode de consommation réduite est mis en œuvre lorsqu'une probabilité de la présence de l'événement ou de l'élément déterminée suite à l'exécution du réseau de neurones de référence est élevée. Le mode nominal est mis en œuvre lorsqu'une probabilité de la présence de l'événement ou de l'élément déterminée suite à l'exécution du réseau de neurones auxiliaire est faible.

Chaque réseau de neurones (c'est-à-dire le réseau de neurones de référence ou le réseau de neurones auxiliaire) est adapté pour prendre en entrée le signal physique dans lequel peuvent survenir des événements ou des éléments. Par exemple, chaque réseau de neurones peut prendre en entrée des images. Chaque réseau de neurones est configuré pour générer en sortie des données de détection.

Néanmoins, le réseau de neurones auxiliaire est distinct du réseau de neurones de référence. En particulier, le réseau de neurones auxiliaire peut présenter une topologie différente du réseau de neurones de référence. En particulier, le réseau de neurones auxiliaire peut avoir des poids différents des poids du réseau de neurones de référence. Le réseau de neurones auxiliaire peut être conçu à partir du réseau de neurones de référence en supprimant certains neurones du réseau de neurones de référence.

Le réseau de neurones auxiliaire est un réseau plus simple et plus rapide que le réseau de neurones de référence. Ainsi l'exécution du réseau de neurones auxiliaire consomme moins d'énergie que l'exécution du réseau de neurones de référence.

L'exécution du réseau de neurones auxiliaire dans le mode de consommation réduite permet ainsi de réduire la consommation d'énergie pour la détection d'événement ou d'élément dans le signal physique lorsque la probabilité de la présence de l'événement ou de l'élément déterminée est faible.

Par ailleurs, le réseau de neurones auxiliaire peut être légèrement moins performant que le réseau de neurones de référence. Toutefois, les performances réduites du réseau de neurones auxiliaire sont compensées par la mise en œuvre du réseau de neurones de référence lorsque la probabilité de la présence de l'événement ou de l'élément déterminée par le réseau de neurones auxiliaire est élevée. En effet, le réseau de neurones auxiliaire est mis en œuvre uniquement lorsque cette probabilité de présence est faible.

Le réseau de neurones de référence et le réseau de neurones auxiliaire peuvent effectuer une même tâche de détection. Par exemple, le réseau de neurones de référence et le réseau de neurones auxiliaire sont configurés pour pouvoir délimiter ledit événement ou ledit élément à détecter dans le signal physique qu'ils reçoivent en entrée. En particulier, lorsque le signal physique en entrée est une image et qu'on cherche à détecter des objets dans ce signal physique, le réseau de neurones de référence ou le réseau de neurones auxiliaire peuvent être adaptés pour encadrer cet objet dans l'image.

En variante, le réseau de neurones de référence et le réseau de neurones auxiliaire peuvent effectuer des tâches différentes. En effet, le réseau de neurones de référence peut être configuré pour pouvoir délimiter ledit événement ou ledit élément à détecter dans le signal physique et le réseau de neurones auxiliaire peut être configuré pour pouvoir uniquement identifier (c'est-à-dire classifier) une présence dudit événement ou dudit élément à détecter dans le signal physique. Par exemple, Le réseau de neurones auxiliaire peut être entraîné de façon à définir des poids adaptés pour identifier un élément ou un événement dans un signal physique plutôt que de localiser cet élément ou événement dans le signal physique. Un tel réseau de neurones auxiliaire est alors plus simple qu'un réseau de neurones capable de délimiter un événement ou un élément à détecter dans un signal physique. Un tel réseau de neurones auxiliaire consomme donc peu d'énergie et peut être exécuté plus rapidement. Le réseau de neurones auxiliaire présente également l'avantage d'occuper un espace réduit dans la mémoire (RAM ou ROM) par rapport au réseau de neurones de référence. Le réseau de neurones auxiliaire peut être entraîné afin de définir des poids adaptés pour reconnaître un élément ou un événement dans un signal physique plutôt que de localiser cet élément ou cet événement dans le signal physique.

Le réseau de neurones de référence peut être quantifié sur 8 bits pour être précis et présenter de bonnes performances. Le réseau de neurones auxiliaire est quant à lui quantifié au maximum sur 8 bits. De préférence, le réseau de neurones auxiliaire est quantifié sur moins de 8 bits. Cela permet de limiter une augmentation trop importante d'un espace de stockage dans la mémoire MEM pour stocker le réseau de neurones auxiliaire.

Il est avantageux de quantifier en binaire les couches cachées (en anglais « hidden layers ») entre une couche d'entrée et une couche de sortie du réseau de neurones auxiliaire. Les poids de ces couches cachées prennent alors comme valeur '0' ou '1'. Le réseau de neurones auxiliaire peut néanmoins présenter certaines couches, notamment la couche d'entrée et la couche de sortie, quantifiées en 8 bits ou en flottants. Un réseau de neurones auxiliaire quantifié en binaire pour la plupart de ces couches peut être obtenus simplement pour identifier un élément dans un signal physique. La publication « Binary Neural Networks: A Survey », de Haotong Qin et al, publiée le 31 mars 2020 décrit des méthodes permettant d'obtenir un réseau de neurones quantifié en binaire.

La figure 2 illustre un diagramme d'états représentant un procédé de détection d'événements ou d'éléments pouvant être mis en œuvre par le microcontrôleur.

Le procédé de détection consiste à exécuter soit le réseau de neurones de référence soit le réseau de neurones auxiliaire en fonction probabilité de présence d'un événement ou d'un élément dans le signal physique reçu en entrée IN du microcontrôleur MCU.

En particulier, le procédé consiste à exécuter le réseau de neurones de référence lorsque le microcontrôleur MCU met en œuvre le mode nominal du procédé de détection, c'est-à-dire lorsque la probabilité de présence d'un événement ou d'un élément est élevée. En outre, le procédé consiste également à exécuter le réseau de neurones auxiliaire lorsque le microcontrôleur MCU met en œuvre le mode de consommation réduite du procédé de détection, c'est-à-dire lorsque la probabilité de présence d'un événement ou d'un élément est faible.

Ici, le réseau de neurones de référence est exécuté dans le mode nominal MN dans la partie supérieure du diagramme, et le réseau de neurones auxiliaire est exécuté dans le mode de consommation réduite MCR dans la partie inférieure du diagramme.

La probabilité de présence d'un événement ou d'un élément est évaluée à partir d'un nombre de détections obtenues sur une période donnée par le réseau de neurones de référence ou par le réseau de neurones auxiliaire.

En particulier, le microcontrôleur utilise une mémoire tampon Sb[] (« buffer ») pour dénombrer le nombre d'événements ou des éléments détectés sur une période T1 dans le mode nominal et sur une période T2 dans le mode de consommation réduite. Les périodes T1 et T2 peuvent être les mêmes.

Le procédé comprend tout d'abord une mise en œuvre du mode nominal pour les étapes 20 à 26.

En particulier, le procédé comprend une étape 20 d'initialisation du mode nominal dans lequel le buffer Sb[] est réinitialisé en mettant à 0 les valeurs Sb[0] à Sb[T1-1].

Ensuite, le procédé comprend une étape 21 d'exécution du réseau de neurones de référence. Le réseau de neurones de référence est alors exécuté en prenant en entrée un signal physique, par exemple une image. L'exécution du réseau de neurones de référence permet de détecter, à une étape 22, la présence ou l'absence de l'événement ou de l'élément dans le signal physique en entrée. Plus particulièrement, le réseau de neurones peut détecter la présence de l'événement ou de l'élément en délimitant cet événement ou cet élément dans le signal physique. Si le réseau de neurones de référence détecte une présence de l'événement ou de l'élément dans le signal physique pour une itération i de l'exécution du réseau de neurones de référence alors la valeur du buffer Sb[i] est mise à 1 à l'étape 23. Si le réseau de neurones de référence détecte une absence de l'événement ou de l'élément dans le signal physique pour une itération i de l'exécution du réseau de neurones de référence alors la valeur du buffer Sb[i] est mise à 0 à l'étape 24. Puis, la valeur de l'indice i est incrémentée à l'étape 25 à la suite de l'étape 23 ou 24.

Ensuite, le microcontrôleur vérifie que le buffer est rempli à l'étape 26. Si le buffer n'est pas rempli alors les étapes 21 à 25 sont répétées de façon à remplir le buffer à la fin de la période T1. Lorsque le buffer est rempli, le microcontrôleur est configuré pour comparer, à l'étape 26 également, la valeur moyenne des valeurs du buffer Sb[] à un seuil K1 défini entre 0 et 1. Si cette valeur moyenne est supérieure au seuil K1, alors la probabilité que l'événement ou l'élément soit bien présent est élevée, le réseau de neurones continue alors d'être exécuté selon le mode nominal sur une nouvelle période T1. Les étapes 21 à 26 sont donc réitérées tant que la valeur moyenne des valeurs du buffer à la fin d'une période T1 est supérieure au seuil K1.

Si la valeur moyenne des valeurs du buffer à la fin d'une période T1 est inférieure au seuil K1, alors le procédé comprend ensuite une mise en œuvre du mode de consommation réduite pour les étapes 28 à 33 afin de réduire la consommation d'énergie du microcontrôleur tout en maintenant une surveillance du signal physique.

En particulier, le procédé comprend une étape 27 d'initialisation du mode de consommation réduite dans lequel le buffer Sb[] est réinitialisé en mettant à 0 les valeurs Sb[0] à Sb[T2-1].

Ensuite, le procédé comprend une étape 28 d'exécution du réseau de neurones auxiliaire. Le réseau de neurones auxiliaire est alors exécuté par le microcontrôleur MCU en prenant en entrée le signal physique. L'exécution du réseau de neurones auxiliaire permet de détecter, à l'étape 29, la présence ou l'absence de l'événement ou de l'élément dans le signal physique en entrée. L'exécution d'un tel réseau de neurones auxiliaire consomme moins d'énergie que l'exécution du réseau de neurones de référence.

Plus particulièrement, comme vu précédemment, le réseau de neurones auxiliaire peut être un réseau de neurones capable de détecter un événement ou un élément dans le signal physique en délimitant cet événement ou cet élément dans le signal physique. En variante, le réseau de neurones auxiliaire peut être un réseau de neurones capable de détecter un événement ou un élément dans le signal physique en identifiant cet événement ou cet élément dans le signal physique.

Si le réseau de neurones auxiliaire détecte une présence de l'événement dans le signal physique pour une itération i de l'exécution du réseau de neurones auxiliaire alors la valeur du buffer Sb[i] est mise à 1 à l'étape 30. Si le réseau de neurones auxiliaire détecte une absence de l'événement ou de l'élément dans le signal physique pour une itération i alors la valeur du buffer Sb[i] est mise à 0 à l'étape 31. Puis, la valeur de l'indice i est incrémentée à l'étape 32 à la suite de l'étape 30 ou 31.

Ensuite, le microcontrôleur vérifie que le buffer est rempli à l'étape 33. Si le buffer n'est pas rempli alors les étapes 28 à 32 sont répétées de façon à remplir le buffer à la fin de la période T2. Lorsque le buffer est rempli, le microcontrôleur est configuré pour comparer, à l'étape 33 également, la valeur moyenne des valeurs du buffer Sb[] à un seuil K2 défini entre 0 et 1. Si cette valeur moyenne est inférieure au seuil K2, alors la probabilité que l'événement ou l'élément soit bien présent est faible, le réseau de neurones auxiliaire continue d'être exécuté dans le mode de consommation réduite sur une nouvelle période T2. Les étapes 28 à 33 sont donc réitérées tant que la valeur moyenne des valeurs du buffer à la fin d'une période T2 est inférieure au seuil K2.

Si la valeur moyenne des valeurs du buffer à la fin de la période T2 est supérieure au seuil K2 alors le réseau de neurones de référence est ensuite exécuté dans le mode nominal, en réitérant le procédé à partir de l'étape 20, de façon à améliorer la détection d'événements ou d'éléments dans le signal physique.

Avantageusement, dans le cas où le réseau de neurones auxiliaire est uniquement capable d'identifier un événement ou un élément dans le signal physique, l'identification permet de simplifier la détection de l'événement ou de l'élément par le réseau de neurones auxiliaire par rapport au réseau de neurones de référence. Une fois l'événement ou l'élément identifié dans le signal physique, le réseau de neurones de référence peut être mis en œuvre pour délimiter ledit événement ou ledit élément. De la sorte, le procédé permet de maintenir de bonnes performances. Par exemple, lorsque le signal physique est une image et que l'on cherche à détecter un objet ou une personne dans l'image, le réseau de neurones auxiliaire est configuré pour identifier qu'un objet ou qu'une personne est présent dans l'image, et le réseau de neurones de référence est configuré pour délimiter l'objet ou la personne dans l'image, notamment pour effectuer un suivi de cet objet ou de cette personne dans une succession d'images.

Si le procédé de détection est mis en œuvre pour une application qui n'est pas trop exigeante en termes de localisation, et/ou de suivi, il est préférable d'utiliser un réseau de neurones auxiliaire permettant de délimiter l'événement ou l'élément dans le signal physique.

À l'inverse, si les exigences de suivi ou de localisation sont élevées, il est préférable d'utiliser un réseau de neurones auxiliaire permettant d'identifier (classifier) l'événement ou l'élément dans le signal physique. En effet, l'identification de l'événement ou l'élément dans le signal physique est plus rapide qu'une délimitation de cet événement ou de cet élément dans le signal. Ainsi, l'identification de l'événement ou de l'élément dans le signal physique permet de passer plus rapidement en mode nominal, et donc de permettre un meilleur suivi de l'événement ou de l'élément dans le signal physique.

Les seuils K1 et K2 peuvent être ajustés selon l'application pour laquelle le procédé est mis en œuvre. En particulier, les seuils K1 et K2 sont sélectionnés en fonction d'une sensibilité (en anglais « recall ») et/ou d'une précision souhaitée. Néanmoins, il est avantageux d'avoir un seuil K1 supérieur à un seuil de fausse alarme défini pour le réseau de neurones de référence afin d'éviter de détecter des événements ou des éléments absents du signal physique qui empêcheraient de passer au mode de consommation réduite. En outre, lorsque le réseau de neurones auxiliaire est configuré pour identifier la présence d'un événement ou d'un élément dans le signal physique, il est avantageux que le seuil K2 soit supérieur à un seuil de fausse alarme défini pour ce réseau de neurones auxiliaire.

En outre, le seuil K1 peut être adapté en fonction des détections obtenues par la mise en œuvre du réseau de neurones auxiliaire suite à un passage en mode de consommation réduite MCR, et le seuil K2 peut être adaptés en fonction des détections obtenues par la mise en œuvre du réseau de neurones auxiliaire suite à un passage en mode nominal MN. Cela permet de réduire les changements de modes pouvant s'avérer inutile entre le mode nominal et le mode de consommation réduite.

En particulier, le seuil K2 utilisé dans le mode de consommation réduite peut être augmenté si la valeur moyenne des valeurs du buffer Sb[] obtenues par la mise en œuvre du réseau de neurones de référence est inférieure à K1 suite à un passage en mode nominal. Le seuil K2 utilisé dans le mode de consommation réduite peut être abaissé si la valeur moyenne des valeurs du buffer Sb[] obtenues par la mise en œuvre du réseau de neurones de référence est supérieure à K1 suite à un passage en mode nominal. Il peut être alors avantageux de définir une borne inférieure et une borne supérieure pour les valeurs que peut prendre le seuil K2.

De manière similaire, le seuil K1 utilisé dans le mode nominal peut être augmenté si la valeur moyenne des valeurs du buffer Sb[] obtenues par la mise en œuvre du réseau de neurones auxiliaire est inférieure à K2 suite à un passage en mode de consommation réduite. Le seuil K1 utilisé dans le mode nominal peut être abaissé si la valeur moyenne des valeurs du buffer Sb[] obtenues par la mise en œuvre du réseau de neurones auxiliaire est supérieure à K2 suite à un passage en mode de consommation réduite. Il peut également être alors avantageux de définir une borne inférieure et une borne supérieure pour les valeurs que peut prendre le seuil K1.

Il est également possible d'ajuster les périodes T1 et T2 en fonction de l'heure de la journée, notamment si la présence d'événements ou d'éléments à certains moments de la journée est *a priori* plus probable qu'à d'autres moments de la journée. Les périodes T1 et T2 peuvent également être ajustées selon la capacité restante de la batterie alimentant le microcontrôleur, ou également selon l'obscurité autour de la caméra lorsque le signal physique est une image. Les périodes T1 et T2 peuvent également être ajustés à partir de statistiques calculées à partir de la fréquence des détections obtenus par la mise en œuvre du procédé de détection dans l'environnement dans lequel le signal physique est capturé.

Par ailleurs, lorsque les signaux physiques reçus en entrée du réseau de neurones correspondent à une série d'images générées par une caméra, il est possible de réduire le nombre d'images par seconde générées par la caméra lorsque le réseau de neurones est exécuté selon le mode de consommation réduite afin de réduire également la consommation d'énergie requise par l'utilisation de la caméra.

Bien entendu, le procédé décrit ne se limite pas aux modes de mise en œuvre décrits. En particulier, il est possible de modifier le procédé de détection décrit ci-dessus de sorte que si le réseau de neurones en mode de consommation réduite détecte plusieurs événements ou éléments dans un même signal physique en entrée (notamment plusieurs objets dans une même image), alors le réseau de neurones est ensuite exécuté directement selon le mode nominal sans attendre la fin de la période T2. En effet, la détection de plusieurs événements ou éléments dans un même signal physique (par exemple une même image) en entrée augmente la probabilité d'une réelle présence d'au moins un événement ou d'au moins un élément dans ce signal physique en entrée.

En outre, afin d'évaluer la pertinence de passer dans le mode de consommation réduite ou dans le mode nominal, il est également possible de se fier à un niveau de confiance pouvant être délivré par le réseau de neurones de référence ou par le réseau de neurones auxiliaire à chaque détection effectuée. La probabilité de présence de l'événement ou de l'élément peut alors être adaptées en fonction du niveau de confiance délivré pour les détections obtenues par la mise en œuvre du réseau de neurones de référence ou par la mise en œuvre du réseau de neurones auxiliaire. En particulier, le buffer Sb[] peut être utilisé pour stocker des niveaux de confiance associés à chaque détection d'un événement ou d'un élément par la mise en œuvre du réseau de neurones de référence ou du réseau de neurones auxiliaire. Il est ensuite possible de comparer une valeur moyenne des valeurs stockées dans le buffer Sb[] à un seuil donné pour évaluer la probabilité de présence de l'événement ou de l'élément dans le signal physique avant de choisir s'il est préférable de passer du mode nominal au mode de consommation réduite, ou inversement.

En outre, dans la description qui précède, le réseau de neurones est mis en œuvre par un microcontrôleur. Néanmoins, il est aussi possible de prévoir d'autres systèmes informatiques pouvant mettre en œuvre le réseau de neurones.

## Revendications

1. Procédé de détection d'événements ou d'éléments dans des signaux physiques, comportant :
- au moins une mise en œuvre (21) d'un réseau de neurones artificiels de référence,
- au moins une mise en œuvre (28) d'un réseau de neurones artificiels auxiliaire distinct du réseau de neurones de référence, le réseau de neurones artificiels auxiliaire étant simplifié par rapport au réseau de neurones de référence,
- au moins une évaluation (26, 33) d'une probabilité de présence de l'événement ou de l'élément par la mise en œuvre du réseau de neurones de référence ou par la mise en œuvre du réseau de neurones auxiliaire, dans lequel le réseau de neurones de référence est mis en œuvre lorsque la probabilité de présence de l'événement ou de l'élément est supérieure à un seuil, et dans lequel le réseau de neurones auxiliaire est mis en œuvre lorsque la probabilité de présence de l'événement ou de l'élément est inférieure audit seuil.

2. Procédé selon la revendication 1, dans lequel le réseau de neurones de référence et le réseau de neurones auxiliaire sont configurés pour pouvoir délimiter ledit événement ou ledit élément à détecter dans le signal physique.

3. Procédé selon la revendication 1, dans lequel le réseau de neurones de référence est configuré pour pouvoir délimiter ledit événement ou ledit élément à détecter dans le signal physique, et dans lequel le réseau de neurones auxiliaire est configuré pour pouvoir identifier une présence dudit événement ou dudit élément à détecter dans le signal physique.

4. Procédé selon l'une des revendications 1 à 3, dans lequel ledit seuil est défini selon une sensibilité et/ou une précision souhaitée du réseau de neurones.

5. Procédé selon l'une des revendications 1 à 4 dans lequel le réseau de neurones auxiliaire comporte au moins une couche quantifiée en binaire.

6. Procédé selon l'une des revendications 1 à 5, dans lequel le signal physique en entrée est une image.

7. Programme d'ordinateur comprenant des instructions qui, lorsque le programme est exécuté par un ordinateur, conduisent celui-ci à :
- mettre en œuvre (21) un réseau de neurones artificiels de référence ou un réseau de neurones artificiels auxiliaire distinct du réseau de neurones de référence pour détecter des événements ou des éléments dans des signaux physiques reçus en entrée de ce réseau de neurones de référence ou de ce réseau de neurones auxiliaire, le réseau de neurones artificiels auxiliaire étant simplifié par rapport au réseau de neurones de référence,
- évaluer (26, 33) une probabilité de présence de l'événement ou de l'élément dans le signal physique par la mise en œuvre du réseau de neurones de référence ou par la mise en œuvre du réseau de neurones auxiliaire,
dans lequel le programme est configuré pour mettre en œuvre le réseau de neurones de référence lorsque la probabilité de présence de l'événement ou de l'élément est supérieure à un seuil, et dans lequel le réseau de neurones auxiliaire est mis en œuvre lorsque la probabilité de présence de l'événement ou de l'élément est inférieure audit seuil.

8. Microcontrôleur comprenant :
- une mémoire (MEM) dans lequel est stocké un programme (PRG) selon la revendication 7, et
- un processeur (PROC) configuré pour exécuter ledit programme.
